Europäisches Patentamt

European Patent Office

Office européen des brevets

(11) Veröffentlichungsnummer: **0 494 349 A2**

# EUROPÄISCHE PATENTANMELDUNG

(21) Anmeldenummer: **91118699.7**

(22) Anmeldetag: **02.11.91**

(51) Int. Cl.5: **G01S 15/52**

(30) Priorität: **11.01.91 DE 4100661**

(43) Veröffentlichungstag der Anmeldung:
**15.07.92 Patentblatt 92/29**

(84) Benannte Vertragsstaaten:
**BE DE FR GB IT NL**

(71) Anmelder: **TELEFUNKEN SYSTEMTECHNIK GMBH**
**Sedanstrasse 10**
**W-7900 Ulm (Donau)(DE)**

(72) Erfinder: **Scherf, Lutz, Dipl.-Ing.**
**Schulstrasse 63**
**W-2200 KL. Nordende(DE)**
Erfinder: **Köhler, Rainer, Dipl.-Ing.**
**Käthe-Kollwitz-Allee 22**
**W-2082 Tornesch(DE)**
Erfinder: **Heinemann, Gerhard, Dipl.-Ing.**
**Egenbüttelweg 44**
**W-2000 Wedel(DE)**
Erfinder: **Grave, Hans-Heinrich, Dipl.-Ing.**
**Reepschlägerstrasse 2**
**W-2000 Wedel(DE)**
Erfinder: **Schulze, Jürgen, Dipl.-Ing.**
**Friedrich-Ebert-Allee 14**
**W-2000 Wedel(DE)**
Erfinder: **Pauer, Jens, Dipl.-Ing.**
**Sapperweg 32**
**W-2000 Hamburg 55(DE)**
Erfinder: **Ulitzka, Manfred, Dipl.-Ing.**
**Im Neugrabener Dorf 28a**
**W-2104 Hamburg 92(DE)**

(74) Vertreter: **Salhoff, Roland, Dipl.-Ing.**
**TELEFUNKEN SYSTEMTECHNIK GMBH**
**Postfach 17 30**
**W-7900 Ulm (Donau)(DE)**

(54) **Innenraumsensor, vorzugsweise für Kraftfahrzeuge.**

(57) Innenraumsensor mit einem Sender zur Erzeugung von akustischen Wellen mit einer vorgegebenen Grundfrequenz und mit einem Empfänger für die reflektierten Wellen sowie eine dem Empfänger nachgeordneten Auswerteeinrichtung zur Erzeugung eines Alarmsignales bei Auftritt von bewegten Körpern in der Nähe des Sensors. Zur Erfassung der bewegten Körper wird mit der Auswerteeinrichtung unter Ausnutzung des Dopplereffektes eine Auswertung von unterem und oberem Seitenband vorgenommen. Zur Erzeugung eines Alarmsignales erfolgt eine Auswertung der beiden Seitenbandsignale auf Gleichheit oder Ungleichheit, wobei ein Alarm nur dann erzeugt wird, wenn beide Signale eine erhebliche Ungleichheit aufweisen.

Fig. 1

Die Erfindung betrifft einen Innenraumsensor gemäß dem Oberbegriff von Anspruch 1 und ein Verfahren zur Erzeugung eines Alarmsignales mittels eines derartigen Innenraumsensors.

Innenraumsensoren zur Erfassung von Bewegungen in überwiegend geschlossenen Räumen, vorzugsweise Kraftfahrzeug-Innenräumen; sind allgemein bekannt. Beispielsweise betreibt ein (quarzgesteuerter) HF-Oszillator einen Ultraschallsender, der den Innenraum beschallt, während ein Ultraschallempfänger den reflektierten Schall empfängt und ihn in ein elektrisches Signal umwandelt. Bei Bewegungen im Innenraum entstehen durch den Dopplereffekt je nach Richtung und Geschwindigkeit der Bewegung höhere und niedrigere Frequenzen, die der Grundfrequenz überlagert sind. Eine Demodulatorschaltung wertet das von der Grundfrequenz abweichende Dopplersignal aus. Wenn ein Signalanteil mit der für einen Eindringversuch typischen Frequenzverschiebung z. B. in der Größenordnung von 100 Hz detektiert wird, und dieser eine bestimmte - einstellbare - Amplitude und Dauer überschreitet; wird von der Schaltung ein alarmauslösendes Signal abgegeben.

Von Nachteil ist, daß ein derartiger Innenraumsensor durch akustische Beschallung mit niederfrequenten Schallsignalen gestört werden kann, wenn die Störfrequenz gleich dem Frequenzhub des Dopplersignales ist, welches einen Alarm auslösen würde. Diese Störbarkeit entsteht dadurch, daß die akustische Beschallung Teile des Innenraums bzw. auch die Luft im Innenraum in Schwingungen versetzt. Dadurch entstehen Modulationsvorgänge und zwar sowohl Frequenz- als auch Amplitudenmodulationen zwischen dem Ultraschallsendesignal und dem Störschall. Die Seitenbänder dieses modulierten Ultraschall-Signals können dann von einem herkömmlichen Demodulator nicht mehr von dem zu detektierenden Doppler-Signal unterschieden werden. Dadurch kann z. B. ein Fehlalarm ausgelöst werden, wenn ein LKW mit geeigne-Motordrehzahl an einem derart gesicherten parkenden Fahrzeug vorüberfährt.

Der Erfindung liegt daher die Aufgabe zugrunde, einen Innenraumsensor der eingangs genannten Art zu schaffen, mit dem ein reflektiertes akustisches Empfangssignal so ausgewertet werden kann, daß ein Unterschied zwischen Beschallungen und Bewegungen erkannt wird.

Die Aufgabe wird erfindungsgemäß durch die kennzeichnenden Merkmale von Anspruch 1 gelöst.

Ausgestaltungen des erfindungsgemäßen Innenraumsensors sind in den Unteransprüchen 2 bis 7 beschrieben.

Ein Verfahren zur Erzeugung eines Alarmsignales unter Verwendung eines erfindungsgemäßen Innenraumsensors ist im Anspruch 8 beansprucht.

In der Zeichnung ist ein Ausführungsbeispiel nach der Erfindung dargestellt, und zwar zeigt:

Fig. 1    das Blockschaltbild eines Innenraumsensors, und

Fig. 2    das Frequenzspektrum eines Empfangssignales bei Bewegungen eins Eindringlings und bei Beschallung in vier Teildarstellungen a bis d.

Der Erfindung liegt folgender physikalischer Zusammenhang zugrunde:

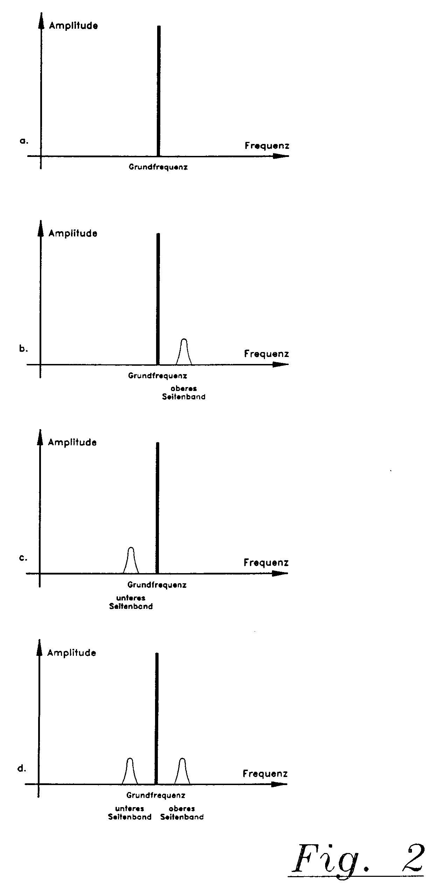

Ein Eindringling bewegt sich entweder auf den Sensor zu, so daß eine Frequenzverschiebung zu höheren Frequenzen hin (oberes Seitenband in Fig. 2b) erfolgt, oder er entfernt sich von dem Sensor, so daß eine Frequenzverschiebung zu niedrigeren Frequenzen hin (unteres Seitenband in Fig. 2c) erfolgt.

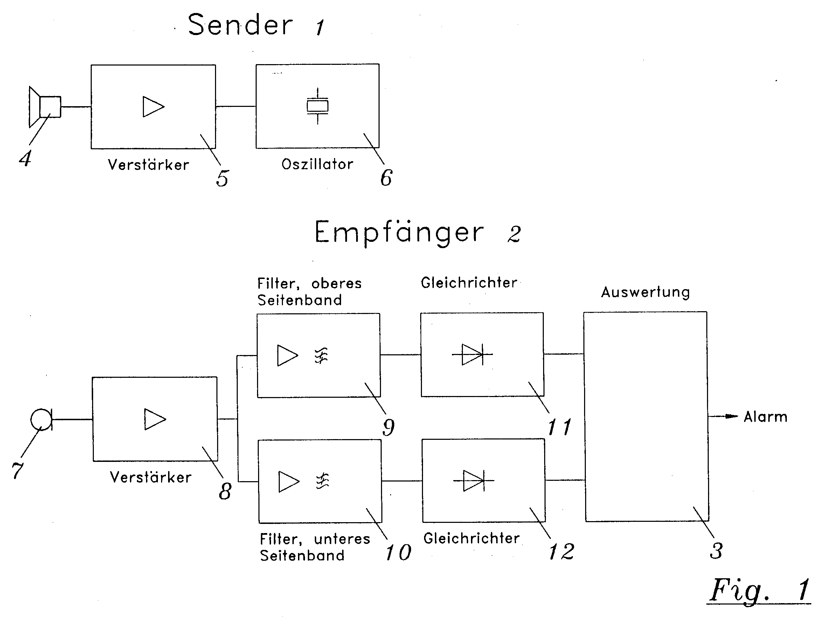

Bei einer Modulation mit einem Störschallsignal geeigneter Frequenz entstehen jedoch beide Seitenbänder gleichzeitig. Bei der erfindungsgemäßen Lösung werden deshalb Frequenzverschiebungen nach oben bzw. nach unten getrennt ausgewertet und nur dann ein Alarmsignal erzeugt, wenn beide Seitenbandamplituden stark ungleich sind. Sind die Seitenbandamplituden größenordnungsmäßig gleich (vgl. Fig. 2d), so wird kein Alarmsignal erzeugt. Ein derartiger Innenraumsensor besteht nach Fig. 1 aus einem Sender 1 und einem Empfänger 2 mit nachgeordneter Auswerteeinrichtung 3. Hierbei weist der Sender 1 eine Sendeeinrichtung 4 zur Abgabe von akustischen Wellen auf, wobei der Sendeeinrichtung 4 ein Verstärker 5 und ein Oszillator 6 vorgeschaltet sind. Die von den Begrenzungen des Innenraumes und von den dort vorhandenen Gegenständen reflektierten Wellen werden von dem Empfänger 2 empfangen.

Der Empfänger besteht aus einer Empfangseinrichtung 7 mit nachgeordnetem Verstärker 8 und zwei parallelen Filterzweigen. Die Filter 9 bzw. 10 sind auf das untere bzw. obere Seitenband abgestimmt. Ihre Durchlaßbereiche sind symmetrisch zur Sendefrequenz des Oszillators 6 abgestimmt.

Die Filter haben eine derartige Steilheit, die sicherstellt, daß die Sendefrequenz im Rahmen der Auswerteempfindlichkeit völlig unterdrückt wird. Hinter den Filtern sind Gleichrichter 11 und 12 angeordnet, denen die Auswerteeinrichtung 3 nachgeschaltet ist.

Mit der Auswerteeinrichtung 3 wird die Bewertung der beiden Seitenbandamplituden vorgenommen. Im einfachsten Fall wird die Differenz der beiden Seitenbandamplituden gebildet und mit einem Schwellwert verglichen. Um dem System eine bessere Dynamik zu geben, kann es auch zweckmäßig sein, die Alarmabgabe von dem Quotienten der beiden Seitenbandsignale abhängig zu machen, so daß ein Alarm nur dann ausgegeben wird, wenn der Quotient größer als eine Zahl K oder kleiner als 1/K ist.

Es kann auch zweckmäßig sein, mit einer nichtlinearen, amplitudenabhängigen Funktion zu entscheiden, ob die beiden Seitenbandamplituden als größenordnungsmäßig gleich bzw. ungleich eingestuft werden sollen.

**Patentansprüche**

1. Innenraumsensor, vorzugsweise für Kraftfahrzeuge, mit einem Sender zur Erzeugung von akustischen Wellen mit einer vorgegebenen Grundfrequenz und mit einem Empfänger für die reflektierten Wellen sowie einer dem Empfänger nachgeordneten Auswerteeinrichtung zur Erzeugung eines Alarmsignales bei Auftritt von bewegten Körpern in der Nähe des Sensors, dadurch gekennzeichnet, daß mit der Auswerteeinrichtung (3) an dem Empfangssignal des Empfängers (2) unter Ausnutzung des Dopplereffektes eine Auswertung von oberem und unterem Seitenband derart vorgenommen wird, daß

   - ein sich auf den Innenraumsensor hin bewegender Körper ein Signal in dem Filterzweig für das obere Seitenband erzeugt,
   - ein sich von dem Innenraumsensor weg bewegender Körper ein Signal in dem Filterzweig für das untere Seitenband erzeugt, sowie
   - ein Auftreten eines Störschalles einer Frequenz, die dem zu detektierenden Doppler-Frequenzhub entspricht, ein Signal in beiden Filterzweigen erzeugt,

   und daß zur Erzeugung des Alarmsignales eine Auswertung der beiden Seitenbandsignale auf Gleichheit oder Ungleichheit erfolgt, und ein Alarm nur erzeugt wird, wenn beide Signale eine erhebliche Ungleichheit aufweisen.

2. Innenraumsensor nach Anspruch 1, gekennzeichnet durch eine einem Oszillator (6) und Verstärker (5) nachgeordnete Sendeeinrichtung (4).

3. Innenraumsensor nach Anspruch 1, dadurch gekennzeichnet, daß der Empfänger (2) eine Empfangseinrichtung (7) mit nachgeordnetem Verstärker (8) und zwei parallelen Filterkreisen aufweist, und daß jeder Filterkreis aus einem Filter für das obere Seitenband bzw. für das untere Seitenband (9 bzw. 10) und einem Gleichrichter (11 bzw. 12) besteht.

4. Innenraumsensor nach Anspruch 1 bis 3, dadurch gekennzeichnet, daß die Durchlaßkurven der beiden Filterzweige (9 und 10) zur Grundfrequenz des Oszillators (6) symmetrisch angeordnet sind.

5. Innenraumsensor nach Anspruch 1 bis 4, dadurch gekennzeichnet, daß in der Auswerteeinrichtung (3) die Differenz der beiden Seitenbandsignale gebildet und mit einem Schwellwert verglichen wird, um bei erheblicher Ungleichheit einen Alarm auszulösen.

6. Innenraumsensor nach Anspruch 1 bis 4, dadurch gekennzeichnet, daß in der Auswerteeinrichtung der Quotient der beiden Seitenbandsignale zur Ausgabe eines Alarmes herangezogen wird für den Fall, daß der Quotient erheblich von 1 nach oben oder unter abweicht.

7. Innenraumsensor nach Anspruch 1 bis 4, dadurch gekennzeichnet, daß in der Auswerteeinrichtung nach einer amplitudenabhängigen nichtlinearen Funktion entschieden wird, ob die beiden Seitenbandsignale näherungsweise gleich oder ungleich sind, um bei näherungsweiser Ungleichheit einen Alarm zu erzeugen.

8. Verfahren zur Erzeugung eines Alarmsignales unter Verwendung eines Innenraumsensors nach einem der Ansprüche 1 bis 7, dadurch gekennzeichnet, daß ein aus einer Grundfrequenz und zwei symmetrisch zur Grundfrequenz liegenden Seitenbändern bestehendes Empfangssignal derart ausgewertet wird, daß die Grundfrequenz unterdrückt wird, daß die getrennt erfaßten Amplituden des oberen und unteren Seitenbandes in ein nach Größe und Zeitdauer bewertetes Verhältnis zueinander gesetzt werden, und daß bei Überschreiten eines vorgegebenen Schwellwertes durch die Größe und/oder Zeitdauer des Verhältniswertes von der Auswerteeinrichtung (3) ein alarmauslösendes Signal erzeugt wird.

Sender 1

Empfänger 2

Fig. 1

EP 0 494 349 A2

a. Amplitude — Frequenz — Grundfrequenz

b. Amplitude — Frequenz — Grundfrequenz — oberes Seitenband

c. Amplitude — Frequenz — Grundfrequenz — unteres Seitenband

d. Amplitude — Frequenz — Grundfrequenz — unteres Seitenband — oberes Seitenband

*Fig. 2*